# EUROPEAN PATENT SPECIFICATION

(11) **EP 3 918 273 B1**
(45) Date of publication and mention of the grant of the patent: **24.04.2024**
(21) Application number: 19912565.9
(22) Date of filing: 25.12.2019
(51) Int. Cl.: G01B 9/10, F16M 11/06

(54) **A MOTORIZED GONIOMETER**
MOTORISIERTES GONIOMETER
GONIOMÈTRE MOTORISÉ

(30) Priority: 01.02.2019 TR 201901538
(43) Date of publication of application: 08.12.2021
(73) Proprietor: Aselsan Elektronik Sanayi ve Ticaret Anonim Sirketi, 06370 Ankara (TR)
(72) Inventor: ANAKLI, Mete, Ankara (TR); TÜRKER, Caner, Ankara (TR)
(74) Representative: Yamankaradeniz, Kemal
(86) International application number: PCT/TR2019/051217
(87) International publication number: WO 2020/159460

(56) References cited:
- CN-A- 106 764 335
- JP-A- H05 143 942
- KR-A- 20090 041 228
- KR-B1- 100 881 373
- KR-B1- 101 213 962
- KR-B1- 101 234 346
- KR-B1- 101 250 480
- KR-B1- 101 250 480

## Description

### Technical Field

The present disclosure is related to a motorized goniometer used in the gimbal (gimbal ring) systems which enables keeping the devices in a stable manner by means of minimizing the vibration during motion video shootings.

The present disclosure is particularly related to a motorized goniometer which is developed on the elevation axis, in order to provide position sensitivity because the devices mounted on the gimbal are heavy and form momentum on the rotational axis, in the axis gimbal systems which used for testing the optical devices.

### State of the Art

Today, together with the development of the technology, devices which everyone can make shooting are started to be produced. Particularly mobile phones becomes a device which is available for taking pictures everywhere by means of the optical cameras within. Many people both record their special moments and make professional shootings in any sports activity. In the images taken by mobile phones, camera or digital cameras, the things that bother the user most are the image vibrations based on the instability of the device.

In the present state of the art, during taking a picture, in order to prevent vibrations, gimbal (gimbal ring) is used. Gimbal is equipment which helps keeping the cameras in a stable manner. Particularly vibration occurs during motion video shots and the movements of the user are directly reflected to the display. Gimbal eliminates the vibration by generating an opposite movement to the movement generated during a video recording process.

In order to test the optical devices used in the present state of the art, sensitive two-axis gimbal systems are required. The devices which will be tested are tested against the collimator by means of moving precisely after they are mounted on the gimbal. As a result of the fact that the devices which will be tested are heavy and form momentum on the rotational axis, position precision on this axis is very difficult. In order to eliminate this disadvantage in the present state of the art, in other words to provide precise positioning ability, usage of goniometer on the elevation axis is required. In known goniometer systems the elevation motion is provided by means of using worm gear mechanism. Control of the rotation axis and determination of its location is provided by the motion of the motor.

In the current state of the art, precise positioning cannot be enabled in the goniometer systems because there are gaps between the gears in the gear mechanism enabling motion and they are worn out in time.

As a result of the research made in related subject matter, patent application No US20100162580A1 titled as "Goniometer" is encountered. In the current invention, there is a gear structure and rotor which can be rotated about a separate motion axis from the rotor plate is combined as a rotatable manner with a shaft and a flexible shaft bearing. In this invention, worm gear mechanism which constitutes the abovementioned disadvantages is used also there is no such a mechanism which will convert the linear motion to a rotational motion.

The application numbered JPH05143942A relates to yawing angle variable carriage mechanism for head. To set the yawing angle of the head in a short time by seeking a test track using a head while shifting the mobile part of a linear carriage mechanism and matching the head direction to the yawing angle for each track by the rotation of a goniometer adjustment knob.

The Chinese patent document numbered CN106764335A discloses a both-way monitoring installing frame of a machine room, and relates to the field of monitoring equipment. The goniometer is driven by spur gear and pinion. There is a gap between spur gear and pinion. Moreover, there is not used any encoder on rotation axis.

The application numbered KR101234346B1 proposes a superprecision gonio stage to precisely control the curve movement of a translation stage by using a screw gauge for a free movement bearing module. The goniometer table movement is obtained by moving a conical piece and angle measurement is not available. On the other hand, when the conical part moves forward and backward, abrasions occur on itself and its counterpart. There is a gap because to run of conical part and as a result of the abrasions that will occur.

A patent numbered KR101250480B1 provides a high-weight and high-precision goniometer to solve a problem that the precision of a device is rapidly decreased by the abrasion of a screw thread when transferring a material of high weight. A ball screw-nut mechanism is used and the nut is directly assembled to goniometer table on the curve rail with connector and a pin. When the ball screw turns, the nut is assembled to the goniometer table on the curved rail moves, but while the nut moves linearly, the pin fixing the nut has to travel along the curved rail with the goniometer table. This means that it must move in two axes (horizontal and vertical). But the pin is designed to go only horizontally. Therefore, the mechanism is locked and does not work. In addition, there is a gap between the slot and pin to work, and as a result of the working of the pin and slot wearing occur so precise movement will not be achieved.

As a result, it is required to make a novelty in the relevant technical art in terms of the abovementioned disadvantages and unsolved problems in the light of the current art.

### Aim of the Invention

The invention aims to solve the abovementioned disadvantages by means of being inspired from the current conditions.

The main aim of the invention is to provide a rotational motion which enables position precision by using threaded shaft instead of worm gear which prevents precise position in the goniometer.

Another aim of the invention is to convert the linear motion of the threaded shaft to a rotational motion.

Another aim of the invention is to provide control of the virtual rotational axis by means of the protractor (encoder) within the goniometer.

In order to fulfill the abovementioned aims, the invention is a motorized goniometer which enables precise positioning of the optical devices mounted on the half-moon part with the rotational motion created by the rotational motion of the motor which is the source of the motion, comprising the following;
- threaded shaft which transmits the drive received from said motor to other elements of the mechanism,
- nut which moves forward and backward on the x axis by means of being engaged on said threaded shaft,
- motion converter to which the nut is connected, which moves in a linear manner by means of the push-pull motion of said nut and moves said half-moon part with the motion it received and converts linear motion to rotational motion.

The structural and characteristic features of the present invention will be understood clearly by the following drawings and the detailed description made with reference to these drawings and therefore the evaluation shall be made by taking these figures and the detailed description into consideration.

### Figures Clarifying the Invention

**Figure 1****,** is a sectional perspective view of the inventive motorized goniometer.

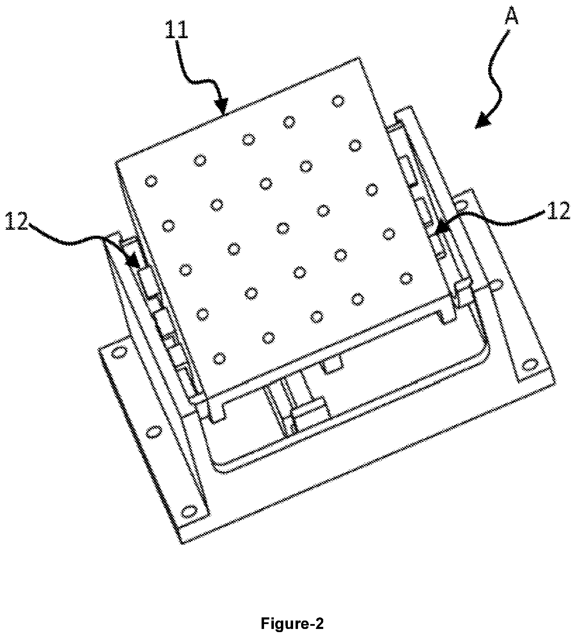

**Figure 2****,** is a top view of the inventive motorized goniometer.

### Description of Part References

### A. Motorized goniometer

| | | | |
|---|---|---|---|
| **1.** | Motor | **8.** | Encoder |
| **2.** | Threaded shaft | **9.** | Rail trailer |
| **3.** | Nut | **10.** | Ray |

| | | | |
|---|---|---|---|
| **4.** | Motion converter | **11.** | Half-moon part |
| **5.** | Slide | **12.** | Angular rail trailer |
| **6.** | Body | **13.** | Angular rail |
| **7.** | Ball bearing | **14.** | Side wall |

### Detailed Description of the Invention

In this detailed description, preferred embodiments of the motorized goniometer (A) subject matter to the invention will be described only in order to better understanding the subject matter.

The invention is a motorized goniometer (A) which enables precise positioning of the optical devices mounted on a half-moon part (11) with the rotational motion created by the rotational motion of a motor (1) which is the source of the motion, characterized in that it comprises the following; a threaded shaft (2) which transmits the drive received from said motor (1) to other elements of the mechanism, a nut (3) which moves forward and backward on the x axis by means of being engaged on said threaded shaft (2) and a motion converter (4) to which the nut (3) is connected, which moves in a linear manner by means of the push-pull motion of said nut and moves said half-moon part (11) with the motion it received and converts linear motion to rotational motion. In addition to this it comprises a body (6) which carries the whole mechanism and a slide (5) which enables connection of the motion converter part with the body. Also it comprises rail trailer (9) which is engaged with said motion part which enables motion converter (4) part to move the half-moon part (11).

The inventive motorized goniometer (A) comprises rail (10) which enables said rail trailer (9) to move on the half-moon part (11) and ball bearing (7) which is located on the motion converter (4) part and enables rotation of the rail trailer (9) and the rail (10) in respect to the half-moon part. Together with this it comprises encoder (8) which is connected with said ball bearing (7) rotating in respect to the half-moon part (11) and enables angle measurement and angular rail trailer (12) which enables rotation of the half-moon part (11) on the angular rail (13) by means of the drive that it receives from said half-moon part (11).

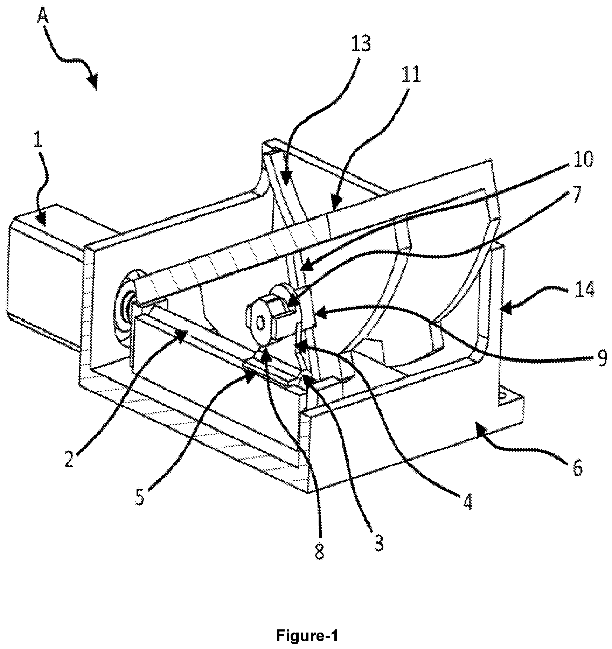

The elements of the inventive motorized goniometer (A) whose sectional perspective view is given in Figure 1 are engaged in the following manner. The electric motor (1) which is the motion source of the motorized goniometer (A) system is connected to the ball threaded shaft (2). There is a nut (3) on the threaded shaft (2) which is connected to the motion converter (4) part. The motion converter (4) part is connected to the slide (5). The slide (5) and the threaded shaft (2) are connected to the body (6). The rotating ball bearing (7), the precise encoder (8) and the rail trailer (9) are present on the motion converter (4) part. The rotational axis of the precise encoder (8) is connected to the rotating ball bearing (7). The rail (10) is connected with the half-moon part (11). On the other arms of the half-moon part (11), the angular rail trolleys (12) are mounted. The angular rail (13) of the angular rail trolleys (12) are mounted on the side walls (14) connected with the body (6). Also a connection detail is configured on the upper portion of the half-moon part (11) in order to connect the devices which will be tested.

The working principal of the subject of the invention is as the following; when the motor (1) rotates the threaded shaft (2), the forward and backward motion of the nut (3) connected with the motion converter (4) part will be enabled. When the nut (3) moves, the motion converter (4) part are going to move in a linear manner. The rail trailer (9) located on the motion converter part (4) will try to push further or pull back the rail (10) connected with the half-moon part (11). The half-moon part (11) will try to rotate since it is connected to the angular rail (13) by means of the angular trolleys (12). Together with the half-moon part, the rail (10) and the rail trailer (9) will rotate with respect to the half-moon part (11) by means of the rotating ball bearing (7) disposed on the motion converter part (4). The distance variations on the vertical axis created based on the rotation will be provided by means of the linear motion of the rail (10) and the rail trailer (9) on each other. The angle measurement will be made by means of the precise encoder (8) which is connected the rotating ball bearing (7) which will again rotate with respect to the half-moon part (11).

The tensions on the ball threaded shaft (2) and the nut (3) are dispersed to all surfaces by means of the balls and the linear motion is performed by means of the surfaces' pulling each other. For this reason, there is no gap expect tensions on the linear motion. Also the nut (3) moves the motion converter part (4) to which it is connected by means of pushing and pulling. The motion converter part (4) creates rotational motion in the half-moon part (11) by means of again pushing and pulling the half-moon part (11).

As a result, the rotation motion created in the half-moon part (11) by the rotational motion of the motor (1) is the motion created by the materials which pushes or pulls each other. As a result of this, precise positioning can be enabled without creating any gap except the tension of the materials. Also, a more precise position control is enabled by means of disposing the precise encoder (8), which rotates with the same angle of the virtual rotational axis of the half-moon part (11) but rotates in the opposite direction, within the motorized goniometer (A). The virtual rotational axis is the center where the rotational motion on the half-moon part (11) is realized.

## Claims

1. A motorized goniometer (A) which enables precise positioning of the optical devices mounted on a half-moon part (11) with the rotational motion created by the rotational motion of a motor (1) which is the source of the motion, **comprising;**
• a threaded shaft (2) which transmits the drive received from the motor (1) to other elements of the mechanism,
• a nut (3) which moves forward and backward on the horizontal axis by means of being engaged on the threaded shaft (2),
• a motion converter (4) to which the nut (3) is connected, which moves in a linear manner by means of the push-pull motion of the nut (3), **characterized in** comprising:
• a rail trailer (9) located on the motion converter (4), pushes further or pulls back a rail (10) connected with the half-moon part (11),
• the rail (10) moves the half-moon part (11) with the motion it received and converts linear motion to rotational motion,
• a ball bearing (7) which is located on the motion converter (4) and enables rotation of the rail trailer (9) and the rail (10) in respect to the half-moon part (11),
• wherein the distance variations on the vertical axis created based on the rotation will be provided by means of the linear motion of the rail (10) and the rail trailer (9) on each other.

2. A motorized goniometer (A) according to claim 1, **characterized by comprising;** a body (6) which carries the whole mechanism.

3. A motorized goniometer (A) according to claim 1, **characterized by comprising;** a slide (5) which enables connection of the motion converter part with the body.

4. A motorized goniometer (A) according to claim 1, **characterized by comprising;** an encoder (8) which is connected with said ball bearing (7) rotating in respect to the half-moon part (11) and enables angle measurement.

5. A motorized goniometer (A) according to claim 1, **characterized by comprising;** an angular rail trailer (12) which enables rotation of the half-moon part (11) on the angular rail (13) by means of the drive that it receives from said half-moon part (11).

## Patentansprüche

1. Ein motorisiertes Goniometer (A), das eine präzise Positionierung von optischen Geräten, die auf einem Halbmondteil (11) montiert sind, durch die Drehbewegung ermöglicht, welche durch die Drehbewegung eines Motors (1) als Antriebsquelle erzeugt wird, umfassend:
• eine Gewindespindel (2), die den vom Motor (1) erhaltenen Antrieb auf andere Elemente des Mechanismus überträgt,
• eine Mutter (3), die sich auf der horizontalen Achse vorwärts und rückwärts bewegt, indem sie auf die Gewindespindel (2) aufgesetzt wird,
• einem Bewegungswandler (4), mit dem die Mutter (3) verbunden ist, die sich in der horizontalen Achse bewegt
• einen Bewegungswandler (4), mit dem die Mutter (3) verbunden ist und der sich durch die Schub-Zug-Bewegung der Mutter (3) linear bewegt,
**dadurch gekennzeichnet, dass** es Folgendes umfasst:
• ein Schienenschlitten (9), der sich auf dem Bewegungswandler (4) befindet, schiebt eine mit dem Halbmondteil (11) verbundene Schiene (10) weiter oder zieht sie zurück,
• die Schiene (10) bewegt das Halbmondteil (11) mit der empfangenen Bewegung und wandelt die lineare Bewegung in eine Drehbewegung um,
• ein Kugellager (7), das sich auf dem Bewegungswandler (4) befindet und die Drehung des Schienenschlittens (9) und der Schiene (10) in Bezug auf den Halbmondteil (11) ermöglicht,
• wobei die Abstandsänderungen auf der vertikalen Achse, die aufgrund der Drehung erzeugt werden, durch die lineare Bewegung der Schiene (10) und des Schienenschlittens (9) zueinander erfolgen.

2. Motorisiertes Goniometer (A) nach Anspruch 1, **dadurch gekennzeichnet, dass** es einen Körper (6) umfasst, der den gesamten Mechanismus trägt.

3. Motorisiertes Goniometer (A) nach Anspruch 1, **dadurch gekennzeichnet, dass** es einen Schieber (5) umfasst, der die Verbindung des Bewegungswandlerteils mit dem Körper ermöglicht.

4. Motorisiertes Goniometer (A) nach Anspruch 1, **dadurch gekennzeichnet, dass** es Folgendes umfasst: einen Encoder (8), der mit dem Kugellager (7) verbunden ist, das sich in Bezug auf den Halbmondteil (11) dreht und eine Winkelmessung ermöglicht.

5. Motorisiertes Goniometer (A) nach Anspruch 1, **dadurch gekennzeichnet, dass** es umfasst: einen WinkelSchienenschlitten (12), der die Drehung des Halbmondteils (11) auf der Winkelschiene (13) durch den Antrieb ermöglicht, den er von dem Halbmondteil (11) erhält.

## Revendications

1. Un goniomètre motorisé (A) qui permet un positionnement précis des dispositifs optiques montés sur une pièce en demi-lune (11) avec le mouvement de rotation créé par le mouvement de rotation d'un moteur (1) qui est la source du mouvement, **comprenant** :
• Un arbre fileté (2) qui transmet l'entraînement reçu du moteur (1) à d'autres éléments du mécanisme,
• Un écrou (3) qui se déplace d'avant en arrière sur l'axe horizontal en s'engageant sur l'arbre fileté (2),
• Un convertisseur de mouvement (4) auquel l'écrou (3) est relié et qui se déplace en de manière linéaire grâce au mouvement de poussée et de traction de l'écrou (3), **caractérisé en ce qu'**il comprend :
• Une remorque de rail (9) située sur le convertisseur de mouvement (4), pousse plus loin ou tire vers l'arrière un rail (10) relié à la partie en demi-lune (11),
• Le rail (10) déplace la pièce en demi-lune (11) avec le mouvement qu'il a reçu et convertit le mouvement linéaire en mouvement de rotation,
• Un roulement à billes (7) situé sur le convertisseur de mouvement (4) et permettant la rotation de la remorque ferroviaire (9) et du rail (10) par rapport à la partie en demi-lune (11),
• Les variations de distance sur l'axe vertical créées par la rotation seront assurées par le mouvement linéaire du rail (10) et de la remorque du rail (9) l'un par rapport à l'autre.

2. Goniomètre motorisé (A) conforme à la revendication 1, **caractérisé par comprenant** : un corps (6) qui porte l'ensemble du mécanisme

3. Goniomètre motorisé (A) conforme à la revendication 1, **caractérisé par comprenant** : une glissière (5) qui permet de relier la partie convertisseur de mouvement au corps.

4. Goniomètre motorisé (A) selon la revendication 1, **caractérisé par comprenant** ; un encodeur (8) qui est relié audit roulement à billes (7) tournant par rapport à la partie en demi-lune (11) et qui permet la mesure de l'angle.

5. Goniomètre motorisé (A) selon la revendication 1, **caractérisé par comprenant;** une remorque à rail angulaire (12) qui permet la rotation de la partie demi-lune (11) sur le rail angulaire (13) au moyen de l'entraînement qu'elle reçoit de ladite partie demi-lune (11).
